# EUROPEAN PATENT SPECIFICATION

(11) **EP 2 367 501 B1**
(45) Date of publication and mention of the grant of the patent: **20.04.2016**
(21) Application number: 09805941.3
(22) Date of filing: 21.12.2009
(51) Int. Cl.: A61C 19/04

(54) **INSTRUMENT FOR DETECTING THE APEX POSITION**
INSTRUMENT ZUR ERFASSUNG DER APEXPOSITION
INSTRUMENT DE DÉTECTION DE LA POSITION D'UNE EXTRÉMITÉ DE RACINE DENTAIRE

(30) Priority: 23.12.2008 IT RM20080691
(43) Date of publication of application: 28.09.2011
(73) Proprietor: Advanced Technology Research - A.T.R. S.R.L., 51100 Pistoia - PT (IT)
(72) Inventor: VITALI, Lapo, 50127 Firenze - FI (IT)
(74) Representative: Hartz, Nikolai
(86) International application number: PCT/IB2009/055868
(87) International publication number: WO 2010/073205

(56) References cited:
- WO-A-2006/021891
- FR-A- 2 759 897
- JP-A- 3 173 559
- US-A- 3 993 044
- US-A- 5 096 419
- US-A1- 2008 182 223

## Description

The present invention relates to an instrument for detecting the apex position and to a methodology implemented thereby.

The state of art reports about various techniques for the apex localization:

The apex localization allows determining when, during an endodontic treatment, the tip of an endodontic instrument, made of steel or nickel-titanium, inserted by the dentist inside the root canal, is at the apex of said canal.

The known methods are based upon the already ascertained knowledge of the equivalent electric circuit of the localization system. Said system consists in making an electric circuit, allowing the passage of electric current between the endodontic instrument and the patient's oral mucosa. In order to obtain said passage, an electrode is connected to the patient's oral mucosa by means of a "lip hook", usually positioned onto the lip, and a second electrode to the endodontic instrument by means of "connecting tweezers for instruments".

An outer apparatus, connected to both electrodes by means of connecting electric cables, is able to feed the first electrode and to process the voltage response onto the second electrode, by providing indications about the proximity of the endodontic instrument tip to the apex of the root canal.

The equivalent electric scheme of the localization system provides that the impedance existing between the endodontic instrument and the lip hook is constituted by a condenser "C" in parallel to a resistance "R". The determination of the parameters "C" and "R" at the position of the apex of the root canal is described also in three-dimensional graphic form in US 2004/0225234 A1.

The presence of a condenser in the equivalent electric scheme of the localization system involves the need for using sinusoidal waves with different frequencies, by determining the relationship between the amplitude of the responses at the different frequencies, and connecting said relationship to values of "C" and "R" corresponding to the apex of the root canal (method described in US 5,096,419).

Furthermore, it is known that the weight of "R" is è predominant in the canal's distal part, whereas the weight of "C" is predominant in the apex part of the root canal. In particular, the capacitive value of "C" increases exponentially in the last millimetre of the canal.

The known art teaches to use sinusoidal signals to determine the capacitive portion "C" of the canal impedance and therefore to reach the apex. However, during the endodontic treatments, it is common practice to avoid that the instrument tip passes beyond the apex of the root canal in order not to modify the morphology thereof. For this reason, it is extremely important to succeed in evaluating the distance of the endodontic tool from the apex and therefore to show to the operator even the apex approaching before reaching it.

Therefore, an additional problem not yet solved by the devices of known art is represented by the size of the resistive part "R" of the impedance along the canal, so that such size can then be exploited to show visually or in other way the apex approaching by the endodontic tool.

The document US2008182223 discloses an instrument for endodontic treatment, comprising a control unit, a first electrode fed by said control unit, apt to be connected to a tool, a second electrode, connected to said unit, for making an electric circuit through a portion of said patient's skin, said electric circuit having a resistive part and a capacitive part. Said control unit comprising means for generating a control signal to be fed to said first electrode, means for acquiring a response signal through said second electrode, means for processing said response signal, and a user interface. Said control signal being periodic and combining alternating signals with different frequencies.

Therefore, the object of the present invention is to provide a solution to this problem left still unsolved by the known art.

This result is reached by providing an instrument as defined in claim 1.

Secondary features of the present invention are instead defined in the corresponding depending claims.

The main advantage of the present invention is then constituted by the fact that it allows evaluating the distance of the root canal apex during the endodontic treatment, in particular after having introduced the endodontic tool into the root canal, and therefore showing the approaching and reaching thereof by avoiding to modify the morphology thereof.

The position of the apex of a root canal is determined by means of detecting "R" and "C" independently, by allowing to unbind then from the complex mathematic algorithms needed to determine the apex position by only using sinusoidal waves.

Additional advantages, as well as the features and application modes of the present invention will result evident from the following detailed description of a preferred embodiment thereof, shown by simple way of example and not for limitative purposes, by making reference to the figures of the enclosed drawings, wherein:
figure 1 is a schematization of a tooth with an endodontic tool wholly inserted as far as the apex of the root canal;
figure 2 is an electric scheme modelling the electric behaviour of the root canal;
figure 3 illustrates a principle scheme of any, even known, system for detecting the apex;
figure 4 is an exemplification of an instrument according to the present invention;
figure 5 is a graph illustrating a waveform utilized in the instrument according to the present invention;
figure 6 is a block diagram of the instrument according to the present invention; and
figures 7 and 8 are graphs illustrating the response of the instrument according to the present invention.

The present invention will be described hereinafter by making reference to the above-mentioned figures.

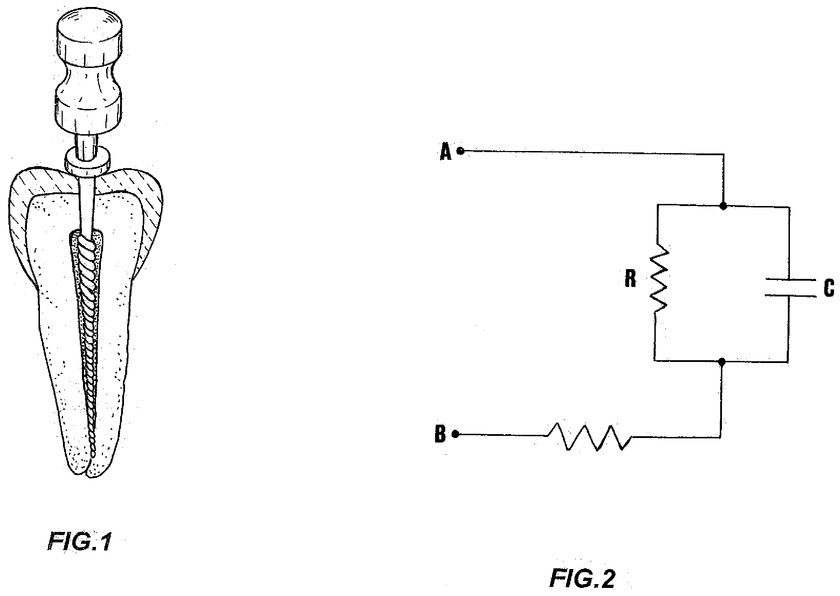

By making reference first of all to figure 1, this shows by way of example what is practically made during the endodontic treatment. An endodontic tool is inserted in the canal and used to remove the tooth pulp contained in the root canal. Therefore, it is clear that, for a correct treatment, the canal will have to be cleaned as far as the apex thereof. For this reason, determining the apex is of fundamental importance.

As already said, the known methods are based upon the up-to-know ascertained knowledge of the equivalent electric circuit modelling the electric behaviour of the root canal, together with the involved body portions surrounding it.

Such equivalent electric scheme, shown in figure 2, is a circuit of RC type, that is having a substantially resistive part "R" and a substantially capacitive part "C".

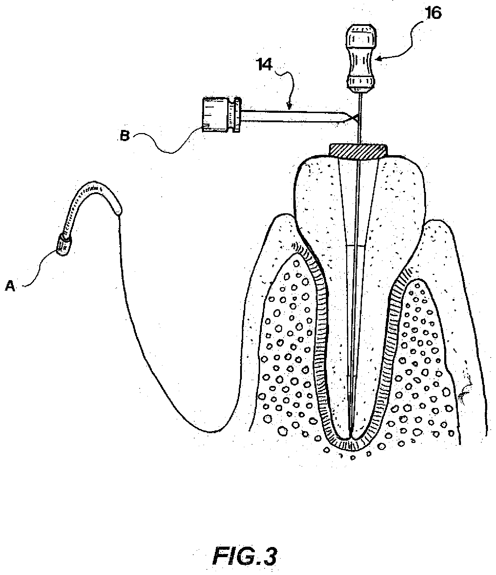

The techniques adopted up to know consist in making an electric circuit, allowing the passage of electric current between the endodontic tool, once inserted into the root canal, and the patient's oral mucosa. In order to obtain said passage, an electrode is connected to the patient's oral mucosa by means of a "lip hook", usually positioned onto the lip, and a second electrode to the tool by means of "connecting tweezers for tools". Such general operating principle is illustrated in figure 3.

Therefore, as shown in figure 3, an outer apparatus connected to the two electrodes by means of connecting electric cables, is able to feed the first electrode and to process the voltage response onto the second electrode, by succeeding in showing that the root canal apex has been reached by the tip of the endodontic instrument.

The equivalent electric scheme of the localization system provides that the impedance existing between the endodontic instrument and the lip hook is constituted by a condenser "C" in parallel to a resistance "R".

For the presence of a condenser in the equivalent electric scheme of the localization system one has always thought to be necessary to use sinusoidal, pseudo sinusoidal, or however alternating waves higher than zero.

By determining the relationship between the amplitude of the responses at different frequencies, it is possible to make said relationship to correspond to values of "C" corresponding to the root canal apex. In this way the instrument succeeds in signalling to have approached the apex.

However, during the endodontic treatments, it is advisable to avoid that the instrument tip passes beyond the root canal apex in order not to modify the morphology thereof. For this reason it is extremely important to succeed in showing to the operator even the apex approaching before having reached it.

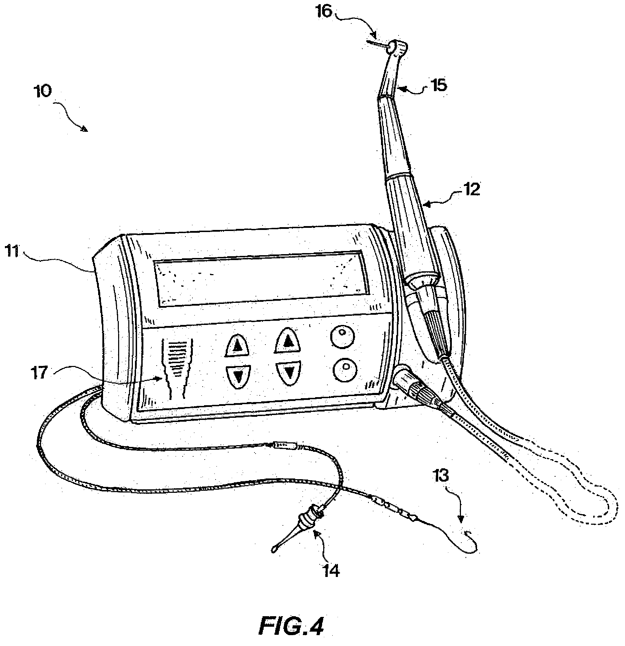

The subsequent figure 4 shows an instrument for endodontic treatments according to the present invention.

The instrument 10 comprises a control electronic unit 11, preferably able to guiding an endodontic micromotor 12, and preferably equipped with two electric cables connecting to two electrodes, a first electrode 13 which will be designated as "lip hook" and a second electrode 14 which will be designated also as connecting "tweezers" for tools.

Tweezers 14, from an electric point of view, is connected in parallel to the endodontic micromotor 12, constructed, together with the contra-angle 15, in conductive metallic material.

The contra-angle 15, in turn, is electrically connected to the tools 16 made of nickel-titanium which can be housed in said contra-angle 15.

This involves that the apex detection can be performed after having inserted into the root canal an outer tool, electrically connected to the tweezers 14, or after having inserted into the root canal a tool made of nickel-titanium 16 housed into the contra-angle and in case placed in rotation.

The invention then, can be implemented both during the endodontic treatment, and therefore in combination with a motorized instrument, or it can be implemented independently, in order to evaluate the distance between the root apex and the deepest end in the cavity, implemented in the canal, from the endodontic tool.

It is clear that the use mode in combination with a motorized instrument appear particularly advantageous under an operating profile.

In both cases, the "lip hook" 13 has to be always connected to the patient's oral mucosa to implement making the electric circuit and to allow the apex detection.

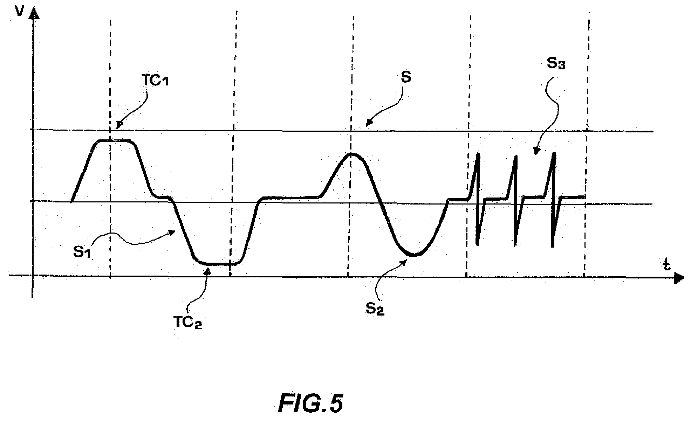

The first electrode 14 applied to the patient, represented by the instrument in nickel titanium housed onto the contra-angle or by the tweezers connected to an outer endodontic instrument inserted into the root canal, is fed by the control unit 11, with a periodic control electric signal S, constituted by several components following each other in time sequence. Figure 5 illustrates a possible time development thereof, by way of example.

The control signal S of figure 5 comprises, in time sequence, the following components:
- a pseudo-sinusoidal component S1 with frequency of about 500 Hz, preferably about 525 Hz, having two constant-voltage portions TC1 and TC2, each one having a duration of about 800 microseconds;
- a sinusoidal component S2, with frequency of about 500 Hz, preferably about 525 Hz,
- a train S3 of several sinusoidal components, with frequency of about 5 KHz, preferably 4,5 KHz. Preferably the train S3 is made of three sinusoidal components in sequence.

It is to be meant that the control signal S could assume even different forms from the one described above.

The second electrode, still represented by the "lip hook" 13, makes the electric circuit and it allows to detect a response electric signal SR, representative of the electric response determined by the current passage between the first and the second electrode.

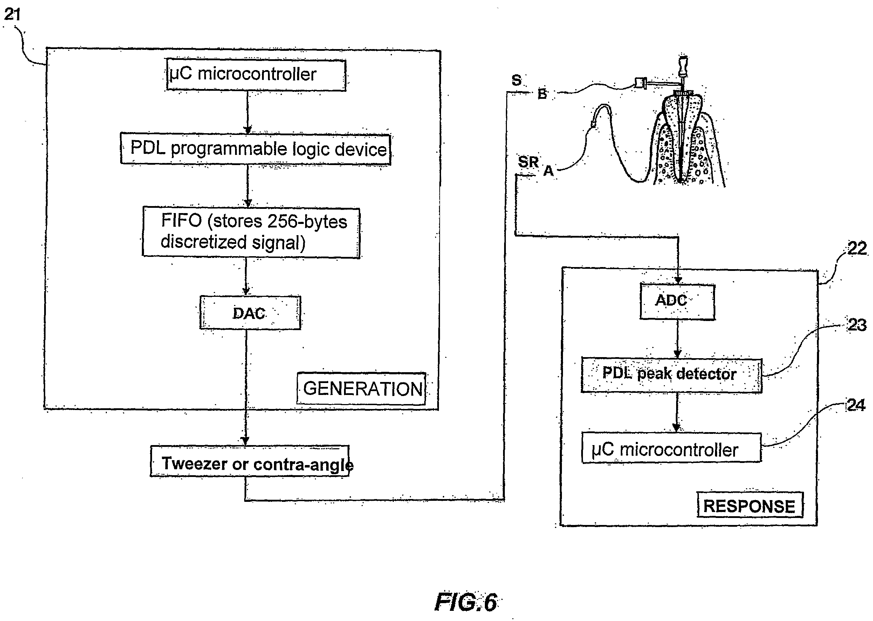

Figure 6 is a block diagram describing the generation of the control electric signal S, the application thereof by means of the electrodes, the acquisition of the response electric signal SR and the detection of the parameters involved in determining the apex.

In particular, the instrument according to the present invention, comprises means for generating a control signal S, of any (pseudo sinusoidal) form, to be fed to said first electrode. In fact, such generating means preferably comprises means for storing a waveform in digital format and means for digital/analog conversion of said waveform, for generating an analog electric signal S to be fed to said first electrode.

Therefore, a sequence of values which discretizes said signal is described via software, for example in a software residing in a microcontroller inside the control electronic unit. Thanks to the use of an analog-digital converter, such values are then used to generate the control signal S.

A response signal SR is re-acquired by acquisition means by means of the lip hook 13 and fed to means for processing said response signal SR.

Such processing means, at least partially, is of software type and it allows to perform calculations to determine some quantities and parameters of interest.

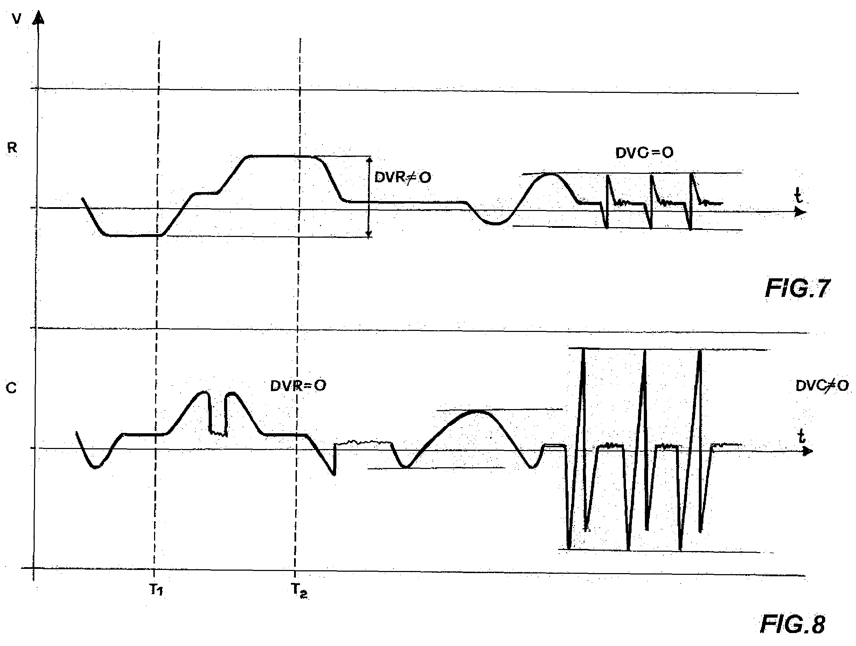

In particular, a first voltage value DVR is calculated as difference of voltage values of said response signal SR, at predetermined time instants designated with T1 and T2 in figures 7 and 8, corresponding to the end of the two tracts with constant voltage of the component S1,

Said processing means further comprises a block 23 playing the function of peak detector. The detector 23 detects the voltage value of each peak of the response signal SR.

Based upon such detections, a second voltage value DVC is calculated as difference between an amplitude average of the sinusoidal components S3 of the train and an amplitude of said first sinusoidal component S2.

It has been experimented that the DVR difference between the voltage values read at the end of the two constant voltage tracts is proportional to the value of "R", whereas the DVC difference between the average of the three response amplitudes of the sinusoidal waves S3 and the response amplitude of the sinusoidal wave S2 is proportional to the value of "C".

In particular, as long as the tool is in the distal part of the root canal, the response signal SR will be similar to the one illustrated in the graph of figure 7, as "R" is predominant in the distal part of the canal.

On the contrary, figure 8 shows a graph of the response signal when the tool is in the apex part of the root canal, wherein "C" is predominant, and based upon the values thereof it is possible determining the apex position, when proximate to about 15 nF.

Therefore, by representing both such DVR and DVC differences through a user interface, of visual or acoustic type, or both, the present invention allows verifying in real time the apex distance and the approaching thereof, each time the tool is inserted deeper.

For example, as shown in figure 4, the instrument 10 according to the present invention, advantageously can comprise a scale 17, for example a LED, for the graphic visualization indicating the apex approaching, as one proceeds with the treatment. As "R" varies very much upon varying the concentration of the rinsing solution used in the canal (NaCl rather than NaOCl for example), advantageously one will take into account the resistive portion "R" preferably in the distal part of the root canal. The visualization of the apex approach in the apex part of the root canal, instead, is transferred to "C", which also determines the precise position of the apex itself.

Therefore, it is evident that the apex distance depends upon said parameters R and C and the variation thereof.

However, the development of such parameters can depend upon several factors. As already said, for example, it can depend upon the salinity of the solution used for washing the canal or it can depend upon other factors linked to the anatomy and/or to the morphology of the canal itself. Therefore, preferably, according to the present invention the apex distance is evaluated and displayed in relative (for example percentages) and not absolute (for ex. measure in mm) terms.

The present invention has been so far described by referring to a preferred embodiment thereof, however the scope of the invention is defined by the appended claims.

## Claims

1. An instrument (10) for endodontic treatment, comprising:
- a microprocessor control unit (11);
- a first electrode (14) fed by said control unit, apt to be connected to a tool (16);
- a second electrode (13), connectable to said unit (11), for making an electric circuit through a portion of a patient's skin, said electric circuit having a resistive part (R) and a capacitive part (C), wherein said microprocessor control unit (11) comprises: means for generating a control signal (S) to be fed to said first electrode;
- means for acquiring a response signal (SR) through said second electrode;
- means for processing said response signal (SR), and user interface means,
wherein said control signal (S) is periodic and comprises, in a period (T), two constant-voltage portions (TC1 , TC2) and two portions (S2, S3) having an alternating pattern, said means for processing said response signal (SR) being apt to calculate a first voltage value (DVR) as difference of voltage values of said response signal (SR), in correspondence of predetermined time instants (T1 , 12), and a second voltage value (DVC) as difference between an average of amplitudes of said sinusoidal components of said portions (S2, S3) having an alternating pattern, said first voltage value (DVR) being proportional to said resistive part (R) and said second voltage value (DVC) being proportional to said capacitive part (C).

2. The instrument according to claim 1, wherein said first electrode comprises tweezers (14) apt to be connected to an endodontic tool (16).

3. The instrument according to claim 1 or 2, wherein said first electrode (14) is electrically connected to a tool (16) carried by an endodontic micromotor (12, 15).

4. The instrument according to one of the claims 1 to 3, wherein said second electrode comprises a lip hook (13) to make contact with a portion of the patient's skin.

5. The instrument according to one of the claims 1 to 4, wherein said means for generating a control signal (S) comprises means for storing a waveform in digital format.

6. The instrument according to claim 5, wherein said means for generating a control signal (S) comprises means for digital/analog conversion of said waveform for generating an analog electric signal (S) to be fed to said first electrode.

7. The instrument according to one of the claims 1 to 6, wherein said constant-voltage portions (TC1 , TC2) are made via a pseudo-sinusoidal component (S1).

8. The instrument according to one of the claims 1 to 7, wherein each of said constant-voltage portions (TC1 , TC2) has a duration of about 800 microseconds.

9. The instrument according to one of the claims 1 to 8, wherein a first portion of said portions having an alternating pattern comprises a sinusoidal component (S2), having a frequency of about 500 Hz.

10. The instrument according to claim 9, wherein a second portion of said portions having an alternating pattern is made as a train of sinusoidal components (S3), having a frequency of about 5 KHz.

11. The instrument according to claim 10, wherein said means for processing said response signal (SR), is apt to calculate a second voltage value (DVC) as difference between an average of amplitudes of said sinusoidal components (S3) of said train and an amplitude of said first sinusoidal component (S2).

12. The instrument according to one of the claims 1 to 11 , wherein said interface means is apt to represent said first and second value (DVR, DVC) during the endodontic treatment.

## Patentansprüche

1. Instrument (10) für eine Endodontie-Behandlung, umfassend:
- eine Mikroprozessorsteuereinheit (11);
- eine erste Elektrode (14), die von der Kontrolleinheit versorgt wird und die geeignet ist mit einem Instrument (16) verbunden zu werden;
- eine zweite Elektrode (13), die mit der Einheit (11) verbunden werden kann, um einen Stromkreis durch einen Teil der Haut eines Patienten zu erzeugen, wobei der Stromkreis einen resistiven Anteil (R) und einen kapazitiven Anteil (C) aufweist, wobei die Mikroprozessorsteuereinheit (11) folgendes umfasst:
- Mittel zum Erzeugen eines Steuersignals (S), das der ersten Elektrode zugeführt wird;
- Mittel zum Erfassen eines Antwortsignals (SR) durch die zweite Elektrode;
- Mittel zum Verarbeiten des Antwortsignals (SR) und eine Benutzerschnittstelle, wobei das Steuersignal (S) periodisch ist und in einer Periode (T) zwei Anteile mit Konstantspannung (TC1, TC2) und zwei Anteile (S2, S3) mit alternierendem Muster umfasst, wobei das Mittel zum Verarbeiten des Antwortsignals (SR) geeignet ist, einen ersten Spannungswert (DVR) als Differenz der Spannungswerte des Antwortsignals (SR) in Übereinstimmung mit vorbestimmten Zeitpunkten (T1, T2) zu berechnen, und einen zweiten Spannungswert (DVC) als Differenz zwischen dem Durchschnittswert der Amplituden der sinusförmigen Komponenten der Anteile (S2, S3) mit alternierendem Muster, wobei der erste Spannungswert (DVR) zu dem resistiven Anteil (R) proportional ist und der zweite Spannungswert (DVC) zu dem kapazitiven Anteil (C) proportional ist.

2. Instrument nach Anspruch 1, wobei die erste Elektrode eine Klemme (14) umfasst, die geeignet ist mit einem Endodontie-Instrument (16) verbunden zu werden.

3. Instrument nach Anspruch 1 oder 2, wobei die erste Elektrode (14) elektrisch mit dem Instrument (16) verbunden ist, das von einem Endodontie-Mikromotor (12, 15) getragen wird.

4. Instrument nach einem der Ansprüche 1 bis 3, wobei die zweite Elektrode einen Lippenhaken (13) umfasst, um einen Kontakt mit einem Teil der Haut des Patienten herzustellen.

5. Instrument nach einem der Ansprüche 1 bis 4, wobei das Mittel zum Erzeugen des Steuersignals (S) ein Mittel zum Speichern der Kurvenform im digitalen Format umfasst.

6. Instrument nach Anspruch 5, wobei das Mittel zum Erzeugen des Steuersignals (S) Mittel für die digital/analog-Umwandlung der Kurvenform umfassen, um ein analoges elektrisches Signal (S) zu erzeugen, das der ersten Elektrode zugeführt wird.

7. Instrument nach einem der Ansprüche 1 bis 6, wobei die Anteile mit Konstantspannung (TC1, TC2) mittels einer pseudo-sinusförmigen Komponente (S1) erzeugt werden.

8. Instrument nach einem der Ansprüche 1 bis 7, wobei jeder der Anteile mit Konstantspannung (TC1, TC2) eine Dauer von ungefähr 800 Mikrosekunden aufweist.

9. Instrument nach einem der Ansprüche 1 bis 8, wobei der erste Anteil der Anteile mit alternierendem Muster eine sinusförmige Komponente (S2) mit einer Frequenz von ungefähr 500 Hz umfasst.

10. Instrument nach Anspruch 9, wobei der zweite Anteil der Anteile mit alternierendem Muster als eine Folge von sinusförmigen Komponenten (S3) mit einer Frequenz von ungefähr 5 Hz ausgebildet ist.

11. Instrument nach Anspruch 10, wobei das Mittel zum Verarbeiten des Antwortsignals (SR) geeignet ist den zweiten Spannungswert (DCC) als Differenz zwischen dem Durchschnittswert der Amplituden der sinusförmigen Komponente (S3) der Folge und einer Amplitude der ersten sinusförmigen Komponente (S2) zu berechnen.

12. Instrument nach einem der Ansprüche 1 bis 11, wobei die Benutzeroberfläche geeignet ist den ersten und den zweiten Wert (DVR, DVC) während der Endodontie-Behandlung wiederzugeben.

## Revendications

1. Instrument (10) pour le traitement endodontique, comprenant:
- une unité de commande à microprocesseur (11) ;
- une première électrode (14) alimentée par ladite unité de commande, capable d'être connectée à un outil (16) ;
- une deuxième électrode (13), pouvant être connectée à ladite unité (111), pour établir un circuit électrique à travers une partie de la peau d'un patient, ledit circuit électrique ayant une partie résistive (R) et une partie capacitive (C),
dans lequel ladite unité de commande à microprocesseur (11) comprend : un moyen pour générer un signal de commande (S) à alimenter à ladite première électrode ;
- un moyen pour acquérir un signal de réponse (SR) à travers ladite deuxième électrode ;
- un moyen pour traiter ledit signal de réponse (SR), et un moyen d'interface utilisateur,
dans lequel ledit signal de commande (S) est périodique et comprend, dans une période (T), deux parties de tension constante (TC1, TC2) et deux partie (S2, S3) ayant un motif alterné, ledit moyen pour traiter ledit signal de réponse (SR) étant capable de calculer une première valeur de tension (DVR) comme différence de valeurs de tension dudit signal de réponse (SR), en correspondance avec des instants prédéterminés (T1, T2), et une deuxième valeur de tension (DVC) comme différence entre une moyenne d'amplitudes desdites composantes sinusoïdales desdites parties (S2, S3) ayant un motif alterné, ladite première valeur de tension (DVR) étant proportionnelle à ladite partie résistive (R) et ladite deuxième valeur de tension (DVC) étant proportionnelle à ladite partie capacitive (C).

2. Instrument selon la revendication 1, dans lequel ladite première électrode comprend des pinces (14) capables d'être connectées à un outil endodontique (16).

3. Instrument selon la revendication 1 ou 2, dans lequel ladite première électrode (14) est électriquement connectée à un outil (16) porté par un micromoteur endodontique (12, 15).

4. Instrument selon l'une des revendications 1 à 3, dans lequel ladite deuxième électrode comprend un crochet à lèvre (13) pour entrer en contact avec une partie de la peau du patient.

5. Instrument selon l'une des revendications 1 à 4, dans lequel ledit moyen pour générer un signal de commande (S) comprend un moyen pour stocker une forme d'onde sous format numérique.

6. Instrument selon la revendication 5, dans lequel ledit moyen pour générer un signal de commande (S) comprend un moyen de conversion numérique/analogique de ladite forme d'onde pour générer un signal électrique analogique (S) à alimenter à ladite première électrode.

7. Instrument selon l'une des revendications 1 à 6, dans lequel lesdites parties de tension constante (TC1, TC2) sont réalisées par l'intermédiaire d'une composante pseudo-sinusoïdale (S1).

8. Instrument selon l'une des revendications 1 à 7, dans lequel chacune desdites parties de tension constante (TC1, TC2) a une durée d'environ 800 microsecondes.

9. Instrument selon l'une des revendications 1 à 8, dans lequel une première partie desdites parties ayant un motif alterné comprend une composante sinusoïdale (S2), ayant une fréquence d'environ 500 Hz.

10. Instrument selon la revendication 9, dans lequel une deuxième partie desdites parties ayant un motif alterné est réalisée en tant que train de composantes sinusoïdales (S3), ayant une fréquence d'environ 5 kHz.

11. Instrument selon la revendication 10, dans lequel ledit moyen pour traiter ledit signal de réponse (SR), est capable de calculer une deuxième valeur de tension (DVC) comme différence entre une moyenne d'amplitudes desdites composantes sinusoïdales (S3) dudit train et une amplitude de ladite première composante sinusoïdale (S2).

12. Instrument selon l'une des revendications 1 à 11, dans lequel ledit moyen d'interface est capable de représenter lesdites première et deuxième valeurs (DVR, DVC) pendant le traitement endodontique.
